(19)

Europäisches
Patentamt
European
Patent Office
Office européen
des brevets

(11) **EP 4 585 494 A1**

(12) **EUROPEAN PATENT APPLICATION**

(43) Date of publication:
**16.07.2025 Bulletin 2025/29**

(21) Application number: **24212143.2**

(22) Date of filing: **11.11.2024**

(51) International Patent Classification (IPC):
**B62D 15/02** (2006.01)    **B62D 5/04** (2006.01)

(52) Cooperative Patent Classification (CPC):
**B62D 5/0457; B62D 15/0245; B62D 15/021**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.01.2024 JP 2024002097**

(71) Applicant: **TOYOTA JIDOSHA KABUSHIKI KAISHA**
**Aichi-ken, 471-8571 (JP)**

(72) Inventor: **ITAZURI, Kazuki**
**Toyota-shi, 471-8571 (JP)**

(74) Representative: **J A Kemp LLP**
**80 Turnmill Street**
**London EC1M 5QU (GB)**

(54) **STEER-BY-WIRE STEERING SYSTEM**

(57)    A steer-by-wire steering system mounted on a vehicle, including: an operation member (10) operable by a driver; a steering actuator (16) having a drive source (38) and configured to steer a wheel (14) by a force of the drive source; a controller (42) configured to control the steering actuator so as to cause the wheel to be steered in accordance with an operation of the operation member, wherein, when a stored neutral position, which is a neutral steering position stored for controlling the steering actuator, deviates from an actual neutral position, which is an actual neutral steering position, the controller executes, in a state in which the operation of the operation member to cause the vehicle to travel straight by the driver of the vehicle is maintained, a neutral position deviation elimination process in which the stored neutral position is brought closer to the actual neutral position.

FIG.1

**Description**

TECHNICAL FIELD

The following disclosure relates to a steer-by-wire steering system mounted on a vehicle.

BACKGROUND ART

In general, an operation member such as a steering wheel and a wheel to be steered (i.e., steerable wheel) are not mechanically coupled to each other in a steer-by-wire steering system mounted on a vehicle (hereinafter, also referred to as a "steer-by-wire system" where appropriate). Thus, the wheel is steered by a force of a drive source of a steering actuator without depending on a force applied to the operation member by a driver of the vehicle (hereinafter, also referred to as an "operation force" where appropriate). In the steer-by-wire system, the wheel is steered mainly in accordance with the operation of the operation member. Therefore, a relationship between an operation position of the operation member and a steering position of the wheel is important in a control of steering of the wheel (hereinafter, also referred to as a "steering control" where appropriate). Here, the operation position of the operation member at which the operation member is to be located when the vehicle travels straight is defined as a neutral operation position. When the operation member is located at the neutral operation position, a posture of the steerable wheel should be a posture to be taken when the vehicle travels straight. That is, the steering position of the wheel should also be located at a neutral steering position.

A controller that executes the steering control stores the neutral operation position and the neutral steering position and executes the steering control based on the stored neutral operation position and neutral steering position. However, when a toe angle of the steerable wheel is adjusted or when a relatively large force is applied to the steerable wheel from the outside, a stored neutral position, which is the stored neutral steering position, may deviate from an actual neutral steering position. When this deviation (hereinafter, also referred to as "neutral position deviation" where appropriate) is generated, it is expected that the steerable wheel is not appropriately steered in response to the operation of the operation member by the driver or the driver feels unnatural with respect to the operation. In the steer-by-wire system, therefore, a process described in Japanese Patent Application No. 2018-177128 is considered, for example. The process is a technique of setting the neutral steering position based on a difference between a target steering position based on a target travel line and a steering position detected by a sensor in a target travel line following control in which the wheel is steered to enable the vehicle to travel along the target travel line.

SUMMARY

The technique described in the above patent publication relates to the target travel line following control which is one of driving support controls and requires high accuracy to some extent for setting the neutral steering position. On the other hand, there is a driving support control to steer the steerable wheel for safety, such as a vehicle stabilization control and a lane departure prevention control. It is desirable to execute such controls even before the neutral steering position with high accuracy is acquired by executing the target travel line following control, that is, even in a state in which there is a certain degree of neutral position deviation. Further, the setting of the neutral steering position in the target travel line following control is based on a complicated method, learning, or the like. It is desired to easily eliminate the neutral position deviation instead of such setting. That is, it is considered that the utility of the steer-by-wire system is improved if the neutral position deviation can be easily eliminated. Accordingly, an aspect of the present disclosure relates to a steer-by-wire steering system for a vehicle having high utility.

In one aspect of the present disclosure, a steer-by-wire steering system of the present disclosure includes: a steer-by-wire steering system mounted on a vehicle, including: an operation member operable by a driver; a steering actuator having a drive source and configured to steer a wheel by a force of the drive source; a controller configured to control the steering actuator so as to cause the wheel to be steered in accordance with an operation of the operation member, wherein, when a stored neutral position, which is a neutral steering position stored for controlling the steering actuator, deviates from an actual neutral position, which is an actual neutral steering position, the controller executes, in a state in which the operation of the operation member to cause the vehicle to travel straight by the driver of the vehicle is maintained, a neutral position deviation elimination process in which the stored neutral position is brought closer to the actual neutral position.

In the steer-by-wire steering system of the present disclosure, the neutral position deviation elimination process is executed in a state in which the driver drives the vehicle straight ahead. Thus, the process is relatively simple. As a result, the steering system of the present disclosure has high utility.

Various Forms

The "operation member" in the present disclosure is generally a steering wheel but may be various members such as a handle, a control stick, and a joystick. The steering system of the present disclosure is a steer-by-wire system. Thus, in general, the "steering actuator" is not mechanically coupled to the operation member. Therefore, the steering actuator includes a "drive source" such as an electric motor or a hydraulic cylinder and steers the wheel by the force of the drive source without depending on a force applied to the operation member by the driver (hereinafter, referred to as an "operation force" where appropriate). The steering actuator may have any configuration. For example, in a vehicle in which a pair of left and right wheels are steered, the steering actuator may be configured to include a steering rod connecting a pair of steering knuckles that respectively hold the wheels and to move the steering rod in a left-right direction. In the steering system including the thus configured steering actuator, a mechanism for adjusting a toe angle of the wheel is provided between each end portion of the steering rod and the corresponding steering knuckle, and the toe angle is adjusted by the mechanism. If such toe angle adjustment is performed, there is a high possibility that the actual neutral steering position changes. Therefore, the neutral position deviation elimination process is highly significant when executed after the toe angle is adjusted.

In a narrow sense, the "steering position" means a posture of the wheel to be steered, e.g., a "rotating position", a "toe angle". However, in the steering system of the present disclosure, the "steering position" is interpreted in a broad sense and also means a motion position of the steering actuator. Therefore, the "neutral steering position" means the posture of the wheel to be taken when the vehicle travels straight or the motion position of the steering actuator when the vehicle travels straight. Specifically, the toe angle of the wheel to be steered (the toe angle of each wheel when the wheels to be steered are a pair of wheels) or the motion position of the steering rod in the steering actuator having the above configuration, in a state in which the vehicle is traveling straight, corresponds to the neutral steering position. Similarly, regarding the operation member, a position of the operation member, e.g., a rotational angle of a steering wheel in a case where the operation member is the steering wheel, is referred to as an "operation position", and an operation position when the vehicle is caused to travel straight is referred to as a "neutral operation position".

In the steer-by-wire system, the wheel is steered by the operation of the operation member by the driver. That is, a control of steering of the wheel (hereinafter, also referred to as a "steering control" where appropriate) is executed based on the operation of the operation member by the driver. In the steering control, when the operation member is located at the neutral operation position, the steering position is the neutral steering position, and when the operation member is operated from the neutral operation position by a certain operation amount, the steering position is changed from the neutral steering position by a steering amount corresponding to the operation amount. The steering control is executed by a "controller". It is noted that the controller is configured to include a computer as a main constituent element and a driver (drive circuit) of the steering actuator.

The controller executes the steering control based on a stored neutral position that is a neutral steering position stored in the controller. Therefore, in a "neutral position deviation" state in which the stored neutral position deviates from an actual neutral position which is an actual neutral steering position, the vehicle is in a state in which the vehicle does not travel straight, that is, in a state in which the vehicle is deflected to either the left or the right, even if the driver causes the operation member to be located at the neutral operation position.

The "neutral position deviation elimination process" in the present disclosure is executed in a state in which the driver maintains the operation of causing the vehicle to travel straight, in other words, in a state in which the driver shifts the operation member from the neutral operation position so as to cause the vehicle to travel straight, when the neutral position deviation is generated. That is, in the neutral position deviation elimination process, the controller shifts (offsets) the stored neutral position in a direction in which the vehicle travels straight, on condition that the driver is performing an operation to maintain the state. That is, the stored neutral position is brought closer to the actual neutral position. According to the neutral position deviation elimination process, although the driver needs to perform the operation for causing the vehicle to travel straight, the neutral steering position can be easily adjusted.

The neutral position deviation elimination process may be a process of instantaneously bringing the stored neutral position closer to the actual neutral position. However, a sudden change in the neutral steering position may give an unnatural feeling to the driver and may inhibit the stability of traveling of the vehicle. Therefore, in the present steering system, it is desirable to execute the neutral position deviation elimination process in which the stored neutral position is gradually changed toward the actual neutral position. In other words, it is desirable to shift the stored neutral steering position little by little in a stepwise manner, that is, to shift the stored neutral steering position such that the neutral steering position changes continuously over a relatively long period of time.

It is desirable that the neutral position deviation elimination process be ended at a time point at which the stored neutral position coincides with the actual neutral position or at a time point at which the stored neutral position can be regarded as coinciding with the actual neutral position. In a case where an amount of the neutral position deviation can be grasped in advance, whether or not the stored neutral position coincides with the actual neutral position or whether or not the stored neutral position can be regarded as coinciding with the actual neutral position may be determined, for example, based on whether or not the stored neutral position is shifted by the amount. Specifically, when a difference between the stored neutral position and the actual neutral position becomes smaller than a set threshold value, the neutral position deviation elimination process may be ended. Alternatively, the method described below may be used.

During execution of the neutral position deviation elimination process, the driver attempts to maintain the operation position of the operation member at a position where the vehicle travels straight. Therefore, when the neutral position deviation is eliminated, the operation position of the operation member is naturally located at the neutral operation position. Using this fact, the neutral position deviation elimination process may be ended on condition that the operation position of the operation member is located at the neutral operation position. The condition may be a condition that the operation position is located substantially at the neutral operation position. Further, in the steer-by-wire system, the steerable wheel and the operation member are not mechanically connected to each other. Therefore, the steer-by-wire system includes, in general, a reaction force applying device configured to apply, to the operation member, an operation reaction force that is a reaction force against the operation of the operation member. The controller also controls the reaction force applying device. More specifically, the controller controls the reaction force applying device to apply, to the operation member, the operation reaction force having a component for returning the operation member to the neutral operation position. In a case where such control is executed, when the neutral position deviation is generated, the driver needs to cause the operation member to be located at a position shifted from the neutral operation position by the operation force against the operation reaction force in order to cause the vehicle to travel straight. However, if the neutral position deviation elimination process progresses in a state in which such an operation reaction force is applied, the operation reaction force gradually decreases. Using this fact, the neutral position deviation elimination process may be ended when the operation reaction force disappears or when the operation force against the operation reaction force disappears. More specifically, when the operation reaction force substantially disappears or when the operation force against the operation reaction force substantially disappears, the neutral position deviation elimination process may be ended on the assumption that the stored neutral position coincides with the actual neutral position or the stored neutral position can be regarded as coinciding with the actual neutral position. According to these methods, even if the amount of the neutral position deviation is not grasped, it is possible to appropriately end the neutral position deviation elimination process.

In many vehicles, there are executed various driving support controls such as a control for causing the vehicle to travel along a target travel line (target travel line following control), a control for preventing the vehicle from deviating from the travel lane (travel lane departure prevention control), a control for stably turning the vehicle along the travel line at the time of turning (vehicle stabilization control), and a control for avoiding a collision with a forward obstacle (collision avoidance control). All of these driving support controls are controls involving automatic steering of the wheel, namely, controls involving steering that does not depend on the operation of the operation member by the driver. In this viewpoint, it is desirable not to execute such controls when the neutral position deviation is generated. However, it is considered that it is desirable to execute the controls that focus on safety such as the travel lane departure prevention control, the vehicle stabilization control, and the collision avoidance control, even if some neutral position deviation is generated and the accuracy of the control itself is somewhat poor. Therefore, in the steering system of the present disclosure, it is desirable to allow at least one of the plurality of driving support controls even during execution of the neutral position deviation elimination process.

More specifically, the plurality of driving support controls is classified into two types. One of the two types is a safety-oriented support control for prioritizing the safety of traveling of the vehicle even if the accuracy of the neutral steering position is low. This type includes the travel lane departure prevention control, the vehicle stabilization control, and the collision avoidance control. The other of the two types is a high-accuracy required support control that requires accurate recognition of the neutral steering position. This type includes the target travel line following control. In view of this, it is desirable to allow execution of at least the safety-oriented control even during execution of the neutral position deviation elimination process.

BRIEF DESCRIPTION OF DRAWINGS

The objects, features, advantages, and technical and industrial significance of the present disclosure will be better understood by reading the following detailed description of an embodiment, when considered in connection with the accompanying drawings, in which:

FIG. 1 is a view illustrating an overall configuration of a steering system according to one embodiment of the present disclosure;

FIG. 2 is a flowchart of a steering control program executed in the steering system of the embodiment;

FIG. 3 is a flowchart of a reaction force control program executed in the steering system of the embodiment.

FIG. 4A is a view schematically illustrating stoppers for defining a motion range of a steering actuator;

FIG. 4B is a schematic view for explaining the adjustment of a toe angle of wheels;

FIG. 5 is a flowchart of a neutral position deviation elimination process program executed in the steering system of the embodiment;

FIG. 6 indicates a flowchart of an IG-OFF program and an IG-ON program executed in association with the neutral position deviation elimination process in the steering system of the embodiment;

FIG. 7 is a diagram showing a specific example of the neutral position deviation elimination process; and

FIG. 8 is a diagram showing another specific example of the neutral position deviation elimination process.

DESCRIPTION

Referring to the drawings, there will be hereinafter described in detail a steer-by-wire steering system according to one embodiment of the present disclosure. It is to be understood that the present disclosure is not limited to the details of the following embodiment but may be embodied based on the forms described above in "Various Forms" and may be changed and modified based on the knowledge of those skilled in the art.

1. Overall Configuration of Steering System

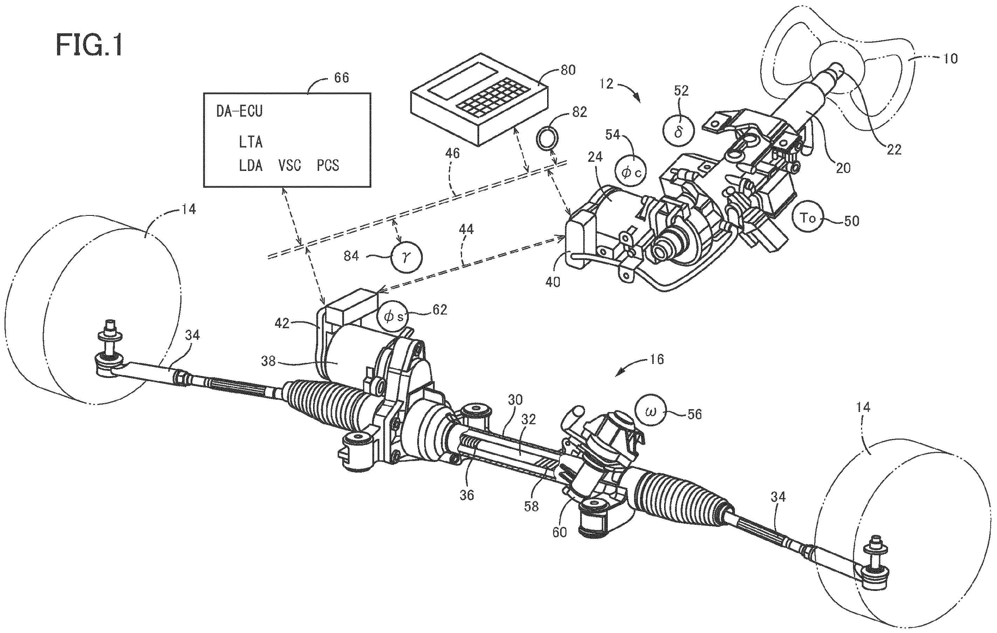

The steering system according to the present embodiment (hereinafter referred to as the "present steering system" or the "present system" where appropriate) is a steer-by-wire steering system capable of steering wheels without depending on an operation force applied to an operation member by a driver. As illustrated in Fig. 1, the steering system includes a reaction force actuator 12 to which a handle 10 is connected and a steering actuator 16 to which right and left wheels 14 are connected to steer them together. The handle 10 functions as an operation member. Here, the handle 10 has a shape obtained by deforming a steering wheel. The handle 10 is rotated by the driver. The reaction force actuator 12 receives the rotational operation of the handle 10 and applies, with respect to the handle 10, namely, with respect to the operation of the handle 10, a reaction force (hereinafter referred to as an "operation reaction force" where appropriate) against the operation of the handle 10.

The reaction force actuator 12 includes: a steering column 20 supported by a reinforcement of an instrument panel; a steering shaft 22 rotatably held by the steering column 20; and a reaction force motor 24, which is an electric motor, for applying a rotational torque to the steering shaft 22 via a force transmission mechanism. The handle 10 is attached to a rear end portion of the steering shaft 22. Though not explained in detail, the force transmission mechanism includes a worm attached to a motor shaft of the reaction force motor 24 and a worm wheel attached to the steering shaft 22 and meshing the worm. The reaction force motor 24 is a three-phase brushless DC motor and functions as a drive source of the reaction force actuator 12. Owing to the torque generated by the reaction force motor 24, a reaction force torque as the operation reaction force is applied to the handle 10 connected to the steering shaft 22. The steering shaft 22 functions as a movable member of the reaction force actuator 12, and the reaction force actuator 12 functions as an operation reaction force applying device.

The steering actuator 16 includes: a generally cylindrical housing 30 supported by a chassis in a posture extending in the right-left direction; a steering rod 32 supported by the housing 30 so as to be unrotatable and movable in the right-left direction; and a pair of tie rods 34 connected to right and left ends of the steering rod 32 via respective ball joints. One end of each tie rod 34 is connected to the corresponding wheel 14 via the ball joint. Specifically, the tie rod 34 is connected, via the ball joint, to a knuckle arm of a steering knuckle that rotatably holds the wheel 14 and that is held by a suspension arm so as to be turnable.

A threaded groove 36 is formed on the steering rod 32. Though not illustrated, a nut holding bearing balls and threadedly engaging the threaded groove 36 is held in the housing 30 such that the nut is rotatable and immovable in the right-left direction. That is, a ball screw mechanism is constituted by the steering rod 32 and the nut. A steering motor 38, which is an electric motor, is attached to the housing 30. The steering motor 38 rotates the nut via a force transmission mechanism. Though not illustrated, the force transmission mechanism includes a pulley attached to the motor shaft of the steering motor 38 and a timing belt looped over the pulley and the outer circumference of the nut. The steering motor 38 is a three-phase brushless DC motor and functions as a drive source of the steering actuator 16. When the steering motor 38 is rotated, the steering rod 32 is moved rightward and leftward, so that the right and left wheels 14 are steered together. The steering rod 32 functions as a movable member of the steering actuator 16.

The reaction force actuator 12 is controlled by a reaction force electronic control unit (hereinafter referred to as a "reaction force ECU" where appropriate) 40 attached to the reaction force motor 24. The reaction force ECU 40 is constituted by a computer including a CPU, a ROM, a RAM, etc., and an inverter that is a driver (drive circuit) of the reaction force motor 24. The reaction force ECU 40 is powered by a battery. Similarly, the steering actuator 16 is controlled by a steering electronic control unit (hereinafter referred to as a "steering ECU" where appropriate) 42 attached to the steering motor 38. The steering ECU 42 is constituted by a computer including a CPU, a ROM, a RAM, etc., and an inverter that is a driver (drive circuit) of the steering motor 38. The steering ECU 42 is powered by the battery.

The reaction force ECU 40 and the steering ECU 42 cooperate with each other to constitute one controller of the present steering system. The reaction force ECU 40 and the steering ECU 42 are connected via a dedicated high-speed communication line 44. Both the reaction force ECU 40 and the steering ECU 42 are connected to a CAN (car area network or controllable area network) 46 of the vehicle.

The reaction force actuator 12 includes, as a constituent element relating to the control, an operation torque sensor 50. Though not explained in detail, the operation torque sensor 50 detects a torsional amount of the steering shaft 22 to thereby detect an operation torque To, which is the operation force applied to the handle 10 by the driver. Further, the reaction force actuator 12 includes an operation angle sensor 52 configured to detect a rotational angle of the steering shaft 22 to thereby detect an operation angle $\delta$ of the handle 10 and a reaction force motor rotational angle sensor 54 configured to detect a rotational angle (rotational phase) $\varphi c$ of the reaction force motor 24 for phase switching.

A steering angle $\omega$ of the wheels 14 and the position of the steering rod 32 in the right-left direction have a specific relationship. The steering actuator 16 includes a steering angle sensor 56 configured to detect the position of the steering rod 32 for detecting the steering angle $\omega$ of the wheels 14. Briefly, a rack 58 is formed on the steering rod 32, and a pinion shaft 60 engaging the rack 58 is held by the housing 30. The steering angle sensor 56 detects the rotational angle of the pinion shaft 60 to thereby detect an amount of the movement of the steering rod 32 in the right-left direction, so that the steering angle $\omega$ of the wheels 14 is detected. It is noted that the position of the steering rod 32 is a motion position of the steering actuator 16, in other words, a steering position of the wheels 14. The steering actuator 16 includes a steering motor rotational angle sensor 62 configured to detect a rotational angle (rotational phase) $\varphi s$ of the steering motor 38 for phase switching.

Control of Steering System

In the present steering system, the steering ECU 42 executes a steering control for steering the wheels 14, and the reaction force ECU 40 executes a reaction force control for applying, to the handle 10, the reaction force torque that is the operation reaction force. The steering control and the reaction force control will be hereinafter described.

(a) Steering Control

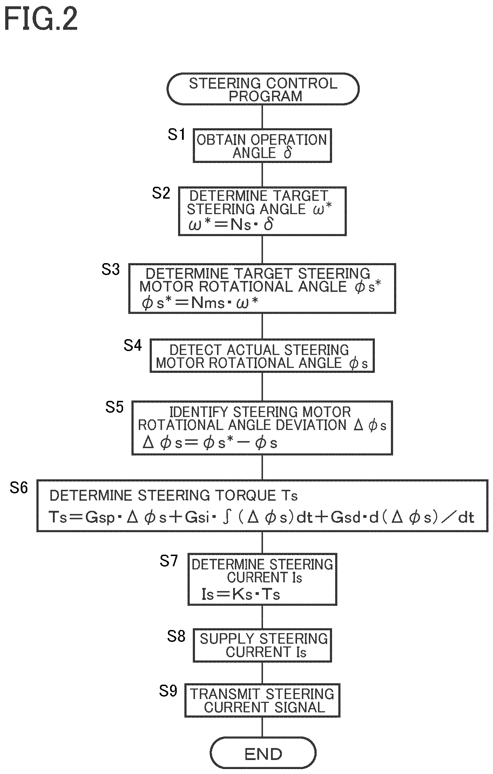

In the steering control, the steering ECU 42 causes the steering actuator 16 to steer the wheels 14 at the steering angle $\omega$ corresponding to the operation angle $\delta$. The computer of the steering ECU 42 repeatedly executes a steering control program represented by a flowchart of FIG. 2 at a short time pitch of from several to several tens of milliseconds, so that the steering control is executed. Referring to the flowchart, the steering control will be described. For easier understanding, the operation angle $\delta$ will be referred to as "the operation angle $\delta$ of the handle 10" where appropriate.

In the processing according to the steering control program, the steering ECU 42 obtains the operation angle $\delta$ of the handle 10 from the reaction force ECU 40 via the dedicated high-speed communication line 44 at Step 1. (Hereinafter, Step 1 is abbreviated as "S1". Other steps will be similarly abbreviated.) The operation angle $\delta$, which is an operation position of the operation member, is obtained as a motion position of the reaction force actuator 12, namely, as a rotational angular position of the steering shaft 22, which is the movable member. The motion position of the reaction force actuator 12 is defined with respect to a neutral operation position, namely, with respect to a motion position at which the reaction force actuator 12 should be located when the vehicle is in a straight traveling state. As later explained in detail, the reaction force ECU 40 identifies, as the operation angle $\delta$, a displacement angle of the steering shaft 22 from a neutral operation angle 60, which is a neutral operation position of the steering shaft 22, based on the motor rotational angle $\varphi c$ of the reaction force motor 24. The reaction force ECU 40 transmits a signal of the operation angle $\delta$ to the steering ECU 42 via the dedicated high-speed communication line 44. The steering ECU 42 obtains the operation angle $\delta$ based on the signal. The neutral operation angle 60 is stored in the reaction force ECU 40.

At S2, the steering ECU 42 determines a target steering angle $\omega^*$ that is the steering angle $\omega$ at which the wheels 14 should be steered, based on the obtained operation angle $\delta$. Like the operation angle $\delta$, the steering angle $\omega$ as a steering position is obtained as a motion position of the steering actuator 16, namely, as a position of the steering rod 32, which is the movable member. The motion position of the steering actuator 16 is defined with respect to a neutral steering position, namely, with respect to a motion position at which the steering actuator 16 should be located when the vehicle is in the straight traveling state. Based on the detection of the steering angle sensor 56, the steering ECU 42 detects, as the steering angle $\omega$, a movement amount of the steering rod 32 from the neutral position, namely, a displacement angle of the pinion shaft 60 from a neutral angular position. The neutral steering position can be referred to as a neutral steering angle $\omega 0$ and will be hereinafter referred to as the neutral steering angle $\omega 0$. As described later in detail, the neutral steering angle $\omega 0$ is stored in the steering ECU 42. The stored neutral steering position is conceptual and may be hereinafter referred to as a "stored neutral position" or a" stored neutral steering angle $\omega 0m$".

The operation angle $\delta$ and the steering angle $\omega$ have a relationship that satisfies a set steering gear ratio Ns. Accordingly, the target steering angle $\omega^*$ is determined at S2 according to the following expression:

$$\omega^* = Ns \cdot \delta$$

The steering gear ratio Ns may be set to be fixed or may be set to change in accordance with, for example, the vehicle speed.

The steering angle $\omega$ and the steering motor rotational angle $\varphi s$ have a relationship that satisfies a predetermined gear ratio Nms. Thus, the steering control is executed based on the steering motor rotational angle $\varphi s$ in view of detection accuracy. At S3, the steering ECU 42 determines, according to the following expression, a target steering motor rotational angle $\varphi s^*$, which is a control target of the steering motor rotational angle $\varphi s$:

$$\varphi s^* = Nms \cdot \omega^*$$

The steering angle sensor 56 can detect an absolute angle. Even if the ignition switch is once turned to OFF, the steering angle sensor 56 can detect the steering angle $\omega$ with respect to the neutral steering position (the stored neutral position) when the ignition switch is subsequently turned to ON. The steering ECU 42 of the present steering system performs calibration of the steering motor rotational angle $\varphi s$ detected by the steering motor rotational angle sensor 62 based on the steering angle $\omega$ detected by the steering angle sensor 56, every time the ignition switch is turned to ON. The steering motor rotational angle sensor 62 can detect the steering motor rotational angle $\varphi s$ only within 360°, namely, the rotational phase of only one rotation. The steering ECU 42, however, detects the steering motor rotational angle $\varphi s$ beyond 360° by cumulative processing.

At S4, the steering ECU 42 causes the steering motor rotational angle sensor 62 to detect the steering motor rotational angle $\varphi s$ at the present time point. At S5, the steering ECU 42 identifies, according to the following expression, a steering motor rotational angle deviation $\Delta \varphi s$, which is a deviation of the steering motor rotational angle $\varphi s$ at the present time point with respect to the target steering motor rotational angle $\varphi s^*$:

$$\Delta \varphi s = \varphi s^* - \varphi s$$

At S6, the steering ECU 42 determines a torque to be generated by the steering motor 38, i.e., a steering torque Ts to be generated by the steering actuator 16, based on the steering motor rotational angle deviation $\Delta \varphi s$ according to the PID feedback control law, namely, according to the following expression:

$$Ts = Gsp \cdot \Delta \varphi s + Gsi \cdot \int (\Delta \varphi s) dt + Gsd \cdot d(\Delta \varphi s)/dt$$

In the above expression, "Gsp", "Gsi", and "Gsd" are a proportional term gain, an integral term gain, and a derivative term gain, respectively.

The steering torque Ts and a steering current Is to be supplied to the steering motor 38 as the drive source are generally proportional to each other. Thus, at S7, the steering ECU 42 determines the steering current Is utilizing a current determining coefficient Ks based on the steering torque Ts according to the following expression:

$$Is = Ks \cdot Ts$$

The thus determined steering current Is is supplied at S8 from the inverter to the steering motor 38. At S9, the steering ECU 42 transmits a signal of the steering current Is to the reaction force ECU 40 via the dedicated high-speed communication line 44 for use in the reaction force control that will be later described. Thus, one execution of the steering control program is ended.

(b) Reaction Force Control

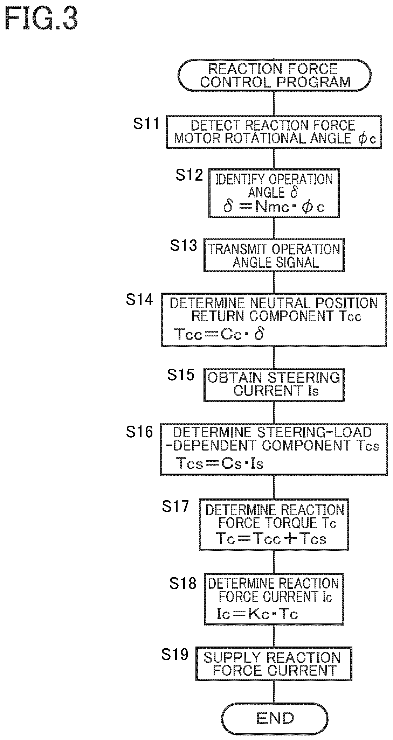

In the reaction force control, the reaction force ECU 40 causes the reaction force actuator 12 to apply, to the handle 10, a reaction force torque, as the reaction force, against the operation of the handle 10, for giving the driver an appropriate steering operation feeling or for returning the handle 10 to the neutral position. The computer of the reaction force ECU 40 repeatedly executes a reaction force control program represented by a flowchart of Fig. 3 at a short time pitch of from several to several tens of milliseconds, so that the reaction force control is executed. Referring to the flowchart, the reaction force control will be described.

In the processing according to the reaction force control program, at S11, the reaction force ECU 40 causes the reaction force motor rotational angle sensor 54 to detect a motor rotational angle $\varphi c$ of the reaction force motor 24.

Because the operation angle $\delta$ and the reaction force motor rotational angle $\varphi c$ have a relationship that satisfies a predetermined gear ratio Nmc, the reaction force control is executed based on the reaction force motor rotational angle $\varphi c$ in view of detection accuracy. At S12, the reaction force ECU 40 identifies the operation angle $\delta$ based on the reaction force motor rotational angle $\varphi c$ according to the following expression:

$$\delta = Nmc \cdot \varphi c$$

The operation angle sensor 52 can detect an absolute angle. Even if the ignition switch is once turned to OFF, the operation angle sensor 52 can detect the operation angle $\delta$ when the ignition switch is subsequently turned to ON. The reaction force ECU 40 of the present steering system performs calibration of the reaction force motor rotational angle $\varphi c$ detected by the reaction force motor rotational angle sensor 54 based on the operation angle $\delta$ detected by the operation angle sensor 52, every time the ignition switch is turned to ON. The reaction force motor rotational angle sensor 54 can detect the reaction force motor rotational angle $\varphi c$ only within 360°, namely, the rotational phase of only one rotation. The reaction force ECU 40 however, detects the reaction force motor rotational angle $\varphi c$ beyond 360° by a cumulative processing. At S 13, the reaction force ECU 40 transmits a signal of the identified operation angle $\delta$ to the steering ECU 42 via the dedicated high-speed communication line 44 for use in the steering control.

The reaction force torque Tc is composed of two components, namely, a neutral position return component Tcc for returning the motion position of the reaction force actuator 12, i.e., the handle 10, to the neutral operation position and a steering-load-dependent component Tcs for simulating the load of the steering actuator 16. At S14, the reaction force ECU 40 determines the neutral position return component Tcc according to the following expression utilizing a neutral position return component determining coefficient Cc:

$$Tcc = Cc \cdot \delta$$

According to the above expression, the neutral position return component Tcc is determined such that the greater the operation angle $\delta$, the greater the reaction force torque Tc for returning the handle 10 to the neutral position.

The load of the steering actuator 16 is considered to be generally proportional to the steering current Is being supplied to the steering motor 38. At S15, the reaction force ECU 40 obtains the steering current Is based on the signal transmitted from the steering ECU 42. At S16, the reaction force ECU 40 determines the steering-load-dependent component Tcs according to the following expression utilizing a steering-load-dependent component determining coefficient Cs:

$$Tcs = Cs \cdot Is$$

According to the above expression, the steering-load-dependent component Tcs is determined such that the greater the steering current Is, namely, the greater the load of the steering actuator 16, the greater the reaction force torque Tc that is applied to the handle 10.

Based on the neutral position return component Tcc and the steering-load-dependent component Tcs determined as described above, the reaction force ECU 40 determines at S17 the reaction force torque Tc according to the following expression:

$$Tc = Tcc + Tcs$$

The reaction force torque Tc and the reaction force current Ic supplied to the reaction force motor 24 as the drive source are generally proportional to each other. At S18, the reaction force ECU 40 determines the reaction force current Ic utilizing a reaction force current determining coefficient Kc based on the reaction force torque Tc according to the following expression:

$$Ic = Kc \cdot Tc$$

The thus determined reaction force current Ic is supplied at S19 from the inverter to the reaction force motor 24. Thus, one execution of the reaction force control program is ended.

(c) Driving Support Control

The vehicle equipped with the present steering system is also equipped with a driving support system in addition to the steering system. The driving support system executes a plurality of driving support controls in order to support driving of the vehicle by a driver. The plurality of driving support controls are a target travel line following control (LTA), a travel lane departure prevention control (LDA), a vehicle stabilization control (VSC), and a collision avoidance control (PCS). All of them are controls that involve automatic steering of the wheels 14, that is, controls involving steering of the wheels 14 that does not depend on the operation of the handle 10 by the driver.

Each of the driving support controls will be briefly explained. The target travel line following control is, for example, a control for causing the vehicle to travel along a target travel line set at the center of a travel lane when the vehicle is traveling on an expressway. According to the control, the steering angle $\omega$ of the wheels 14 is adjusted when the vehicle travels off the target travel line due to steering of the wheels 14 by the driver. The lane departure prevention control is for preventing the vehicle from departing from the travel lane. According to the control, when the vehicle protrudes to the left or right from the travel lane in which the vehicle is traveling, a warning is issued to the driver, and the wheels 14 are forcibly steered to bring the vehicle into the travel lane. This control is executed only when the vehicle is traveling at a certain speed or higher (e.g., 50 km/h or higher). The vehicle stabilization control is for stabilizing the traveling or the posture of the vehicle when the vehicle is turning. According to the control, in a case where the vehicle has a tendency of understeer or oversteer beyond a limit, the wheels 14 are steered in addition to the operation of the brake, the accelerator, and the like in order to suppress the understeer or the oversteer. The collision avoidance control is for preventing the vehicle from colliding with an obstacle in front of the vehicle. According to the collision avoidance control, when the vehicle is highly likely to collide with the obstacle in front of the vehicle in spite of application of brake, the wheels 14 are steered to avoid the collision. The vehicle stabilization control and the collision avoidance control are executed regardless of whether the vehicle is traveling on a general road or regardless of the degree of the traveling speed of the vehicle.

Each of the driving support controls described above is executed by a driving support electronic control unit (hereinafter, also referred to as a "driving support ECU" where appropriate). As shown in FIG. 1, the driving support ECU 66 (denoted as "DA-ECU" in FIG. 1) is connected to the CAN 46. Although the driving support ECU 66 is illustrated as one unit in FIG. 1, the vehicle is equipped with a plurality of electronic control units corresponding to the plurality of driving support controls. The driving support ECU 66 transmits a steering command to the steering ECU 42 via the CAN 46. More specifically, the driving support ECU 66 steers the wheels 14 so as to intervene in the steering control described above. Specifically, a command as to the target steering angle $\omega^*$ is sent from the driving support ECU 66, and the steering ECU 42 executes the steering control based on the target steering angle $\omega^*$ sent from the driving support ECU 66 instead of the target steering angle $\omega^*$ determined as described above based on the operation angle $\delta$.

Although a detailed description is omitted, the driving support ECU 66 stores, in relation to each driving support control, a neutral steering position unique to each control, that is, a neutral turning angle $\omega 0$ unique to each control. The neutral steering angles $\omega 0$ are acquired by learning. The driving support controls differ from each other in the required control accuracy and also differ from each other in the accuracy of learning, specifically, the accuracy of the neutral steering angle $\omega 0$ acquired by learning. Specifically, the highest accuracy is required for the target travel line following control, and the accuracy to be required decreases in the order of the travel lane departure prevention control, the vehicle stabilization control, and the collision avoidance control. On the other hand, the degree of necessity of execution of the control is set in consideration of the safety of traveling of the vehicle so as to be inversely proportional to the accuracy. The degree of necessity of the collision avoidance control is the highest, and the degree of necessity of the vehicle stabilization control, the degree of necessity of the travel lane departure prevention control, and the degree of necessity of the target travel line following control decrease in this order. The learning time of the neutral steering angle $\omega 0$ increases in the control in which the accuracy to be required is higher.

In view of the above, in the vehicle equipped with the present steering system, the driving support control is classified into two types. One of them is a safety-oriented support control, which includes the travel lane departure prevention control, the vehicle stabilization control, and the collision avoidance control. The other of them is a high-accuracy required support control, which includes the target travel line following control. As will be described in detail, these two types of control are different from each other in handling as to a neutral position deviation elimination process.

3. Neutral Steering Position and Setting Thereof

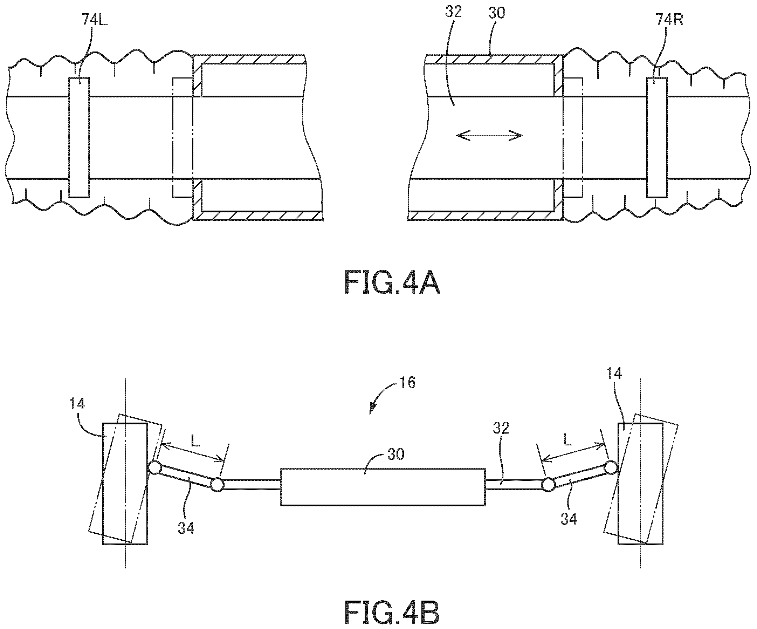

The steering actuator 16 has a motion range for the wheel steering motion in the right-left direction, and the middle of the motion range, that is, a position just in the middle of the motion range, is set as a mechanical neutral position. FIG. 4A is a schematic view illustrating a part of a right side portion and a part of a left side portion of the steering actuator 16. As shown in FIG. 4A, the steering rod 32 (the movable member) of the steering actuator 16 is provided with rings 74R, 74L at respective portions of the steering rod 32 extending from the housing 30. When the steering rod 32 is moved rightward to a certain extent as indicated by the long dashed double-short dashed line, the ring 74L comes into contact with a left end of the housing 30, so that the steering rod 32 is prohibited from moving rightward. In this state, the motion position of the steering rod 32 corresponds to one end, i.e., a right-side end, of the motion range of the steering actuator 16. When the steering rod 32 is moved leftward to a certain extent as indicated by the long dashed double-short dashed line, the ring 74R comes into contact with a right end of the housing 30, so that the steering rod 32 is prohibited from moving leftward. In this state, the motion position of the steering rod 32 corresponds to the other end, i.e., a left-side end, of the motion range of the steering actuator 16. In this way, the one end and the other end of the motion range are defined. The state in which each ring 74R, 74L is located at the position indicated by the solid line in Fig. 4A corresponds to a state in which the motion position of the steering actuator 16 is the middle of the motion range, i.e., a state in which the motion position of the steering actuator 16 is a mechanical neutral steering position. This neutral steering position is the motion position of the steering actuator 16 that should be maintained in the straight traveling state of the vehicle. The right end and the left end of the housing 30 with which the rings 74R, 74L respectively come into contact function as a pair of stoppers for stopping the rings 74R, 74L.

After the vehicle is manufactured, that is, after the steering actuator 16 is mounted on the vehicle body, the toe angle of the wheels 14 is adjusted in a factory before shipment. In short, it is desirable that the toe angle of the wheel 14 be substantially 0° when the vehicle is traveling straight, as schematically shown in FIG. 4B. The toe angle of the wheels 14 is adjusted by adjusting a tie rod length L, which is a length of each tie rod 34, in a state in which the motion position of the steering actuator 16 is maintained at the mechanical neutral steering position described above. A specific adjustment method may follow a general method, and a description thereof is omitted here.

After the toe angle adjustment, there is executed a process of storing, in the steering ECU 42, a detection value of the steering angle sensor 56 at that time as the neutral steering angle $\omega0$, which is the neutral steering position. By this process, the neutral steering angle $\omega0$ at that time is set to an initial stored neutral steering angle $\omega0mi$, which is an initial stored neutral position. As described above, the stored neutral steering angle $\omega0m$, which is the stored neutral position, is conceptual and may be changed after shipment. Actually, a value obtained by adding a stored steering offset angle $\Delta\omega m$, which is a stored steering offset angle $\Delta\omega$, to the initial stored neutral steering angle $\omega0mi$ is set as the neutral steering angle $\omega0$, and the steering control is executed. Therefore, the steering ECU 42 stores the initial stored neutral steering angle $\omega0mi$ and the stored steering offset angle $\Delta\omega m$. The stored neutral steering angle $\omega0m$, that is, the neutral steering angle $\omega0$ used for the steering control, is changed by changing the stored steering offset angle $\Delta\omega m$. It is noted that the stored steering offset angle $\Delta\omega m$ is set to 0° immediately after the toe angle adjustment is performed after the vehicle is manufactured. In the following description, a value obtained by adding the initial stored neutral steering angle $\omega0mi$ and the stored steering offset angle $\Delta\omega m$ will be treated as the stored neutral steering angle $\omega0m$.

The neutral operation position of the handle 10, which is the operation member, is also set in the same manner as the neutral steering position when the handle 10 is attached to the steering shaft 22, but a description thereof will be omitted here.

4. Neutral Position Deviation and Process for Elimination Thereof

(a) Deviation of Neutral Steering Position

The toe angle of the wheel 14 to be steered may need to be readjusted for some reason, for example, at a dealer who sold the vehicle. Further, for example, though not reaching a stage where the toe angle is readjusted at a dealer, it is expected that the toe angle slightly changes due to some cause (such as a collision of the wheel 14 with a curb, fitting of the wheel 14 into a groove, or aging). As described above, the steering control is executed using the stored neutral steering angle $\omega0m$ as the neutral steering angle $\omega0$. However, in a case where the toe angle of the wheel 14 is readjusted or in a case where the toe angle changes, an actual neutral steering position (which may be simply referred to as an "actual neutral position") which is the neutral steering position at which the wheel 14 should be located when the vehicle travels straight changes, that is, an actual neutral steering angle $\omega0r$ which is an actual value of the neutral steering angle $\omega0$ changes. In other words, the stored neutral steering angle $\omega0m$ set as described above based on the mechanical neutral motion position of the steering actuator 16 deviates from the actual neutral steering angle $\omega0r$. That is, a neutral position deviation is generated.

As described above, the steering control is executed using the stored neutral steering angle $\omega0m$ as the neutral steering angle $\omega0$. However, when the neutral position deviation is generated, the vehicle is deflected to either the left or the right even if the driver maintains the handle 10 at the neutral operation position. That is, it is expected that the wheels 14 are not appropriately steered. In other words, when the driver operates the handle 10 to cause the vehicle to travel straight, the handle 10 needs to be maintained at a position that deviates from the neutral operation position, and the reaction force actuator 12 generates a reaction force torque Tc corresponding to the operation angle $\delta$ at that time by the neutral position return component Tcc descried above. In this case, it is necessary for the driver to maintain the handle 10 against the reaction force torque Tc, thus causing the driver to have an unnatural feeling with respect to the operation of the handle 10.

(b) Outline of Neutral Position Deviation Elimination Process

In order to eliminate the neutral position deviation, a neutral position deviation elimination process is executed in the present steering system in a state in which the vehicle is traveling, more specifically, in a state in which the steering control and the reaction force control are executed. The neutral position deviation elimination process may be executed, for example, as a work of an adjuster of a dealer after the toe angle adjustment at the dealer or may be executed by a user of the vehicle. In a case where the neutral position deviation elimination process is executed based on the operation of the adjuster, the neutral position deviation elimination process is executed by connecting an operation terminal 80 to the vehicle as illustrated in FIG. 1. The operation terminal 80 includes a display, a keyboard, and the like. The operation terminal 80 is connected to a connector provided in the vehicle so as to be connected to the steering ECU 42 via the CAN 46. The operation terminal 80 can access various kinds of information related to the present steering system, such as the stored steering offset angle $\Delta\omega m$ stored in the steering ECU 42 at the present time. Though not described in detail, in the neutral position deviation elimination process using the operation terminal 80, the adjuster can eliminate the neutral position deviation with higher accuracy while observing a change in the stored neutral steering angle $\omega 0m$. On the other hand, in a case where the neutral position deviation elimination process is executed based on the operation of the user of the vehicle, the neutral position deviation elimination process is executed using a position deviation elimination process start switch 82 provided on the instrument panel.

Simply speaking, the neutral position deviation elimination process is a process of bringing the stored neutral steering angle $\omega 0m$, which is the stored neutral steering position, closer to the actual neutral steering angle $\omega 0r$. In other words, the neutral position deviation elimination process is a process of changing the stored steering offset angle $\Delta\omega m$ such that the stored neutral steering angle $\omega 0m$ approaches the actual neutral steering angle $\omega 0r$. The neutral position deviation elimination process is executed in a state in which the steering control and the reaction force control described above are executed and an adjuster or a user (hereinafter, may be collectively referred to as a "driver") maintains the operation of the handle 10 such that the vehicle travels straight. In a case where the vehicle travels straight when the neutral position deviation is generated, the operation angle $\delta$ of the handle 10 deviates from the neutral operation angle 60, and the reaction force torque Tc corresponding to the deviation is generated. Therefore, the neutral position deviation elimination process is executed in a state in which the driver applies, to the handle 10, the operation torque To against the reaction force torque Tc.

The neutral position deviation elimination process is started by the driver's operation of the operation terminal 80 or the position deviation elimination process start switch 82. When the neutral position deviation elimination process is started, the steering ECU 42 initially determines whether an execution condition is satisfied. The execution condition is that a vehicle speed v, which is a traveling speed of the vehicle, falls within a set speed range and the vehicle is traveling straight. The vehicle speed v is acquired from a brake electronic control unit (brake ECU) (not shown) via the CAN 46, and whether or not the vehicle travels straight is determined based on a yaw rate $\gamma$ detected by a yaw rate sensor 84 provided in the vehicle. When the execution condition is satisfied, the steering ECU 42 executes an initial process. In the initial process, a shift steering offset angle $\Delta\omega t$, which is the steering offset angle $\Delta\omega$ for shifting the neutral steering angle $\omega 0$, is set to the stored steering offset angle $\Delta\omega m$ stored at the present time. Then, instead of the stored neutral steering angle $\omega 0m$, a value obtained by adding the shift steering offset angle $\Delta\omega t$ to the initial stored neutral steering angle $\omega 0mi$ is set as the neutral steering angle $\omega 0$, and the steering control is executed based on the neutral steering angle $\omega 0$.

Next, the steering ECU 42 determines in which one of the left direction and the right direction the neutral steering angle $\omega 0$, that is, the stored neutral steering angle $\omega 0m$ at the present time, deviates from the actual neutral steering angle $\omega 0r$. That is, the steering ECU 42 identifies in which one of the left direction and the right direction the stored steering offset angle $\Delta\omega m$ is to be shifted from the current value, that is, the steering ECU 42 identifies a shift direction of the neutral steering angle $\omega 0$. The shift direction may be identified based on the detection value of the steering angle sensor 56, for example. Specifically, at the present time, the steering angle $\omega$ is the actual neutral steering angle $\omega 0r$ or is substantially the actual neutral steering angle $\omega 0r$. Therefore, by comparing the stored neutral steering angle $\omega 0m$ with the value of the steering angle $\omega$ detected by the steering angle sensor 56 at the present time, a deviation angle $d\omega 0$ of the neutral steering angle $\omega 0$, which is a deviation amount of the neutral steering position, can be grasped, and the shift direction can be identified. Further, the shift direction may be identified based on a value of the operation angle $\delta$ of the handle 10 detected by the operation angle sensor 52, a value of the operation torque To detected by the operation torque sensor 50, or a value of the reaction force torque Tc being generated, for example.

Based on the shift direction identified as described above, the steering ECU 42 gradually changes the neutral steering angle $\omega 0$ toward the actual neutral steering angle $\omega 0r$ on condition that the execution condition is satisfied. Specifically, the shift steering offset angle $\Delta\omega t$ is changed by a set shift angle $d\Delta\omega$, and the steering control continues to be executed using, as the neutral steering angle $\omega 0$, a value obtained by adding the changed shift steering offset angle $\Delta\omega t$ to the initial stored neutral steering angle $\omega 0mi$. The change of the shift steering offset angle $\Delta\omega t$ is repeatedly executed until a change end condition (hereinafter, simply referred to as an "end condition" where appropriate) described later is satisfied.

The end condition is that a value P of a determination parameter is equal to a value that can be regarded as substantially 0. As the determination parameter P, there may be employed any of the deviation angle $d\omega 0$ of the neutral steering angle $\omega 0$, the detection value of the operation angle $\delta$ of the handle 10 by the operation angle sensor 52, the detection value of the operation torque To by the operation torque sensor 50, and the value of the reaction force torque Tc being generated, which values have been described in relation to the identification of the shift direction. Regarding the steering of the wheels 14 and the operation of the handle 10, various numerical parameters such as the steering angle $\omega$

and the operation angle $\delta$ are treated hereinafter such that a value corresponding to left turning is + and a value corresponding to right turning is -. The determination parameter P is treated in the same manner. If thus treated, the end condition may be IPI<Pt. It is noted that a threshold value Pt is set to a value at which the neutral position deviation is considered to be eliminated.

Specifically, in a case where the determination parameter P is the deviation angle $d\omega0$, an absolute value $|d\omega0|$ of the deviation angle decreases as the shift steering offset angle $\Delta\omega t$ is changed, and it can be considered that the neutral position deviation is eliminated at a time point when the absolute value $|d\omega0|$ becomes smaller than a threshold value $d\omega0t$. Further, as for the detection value of the operation angle $\delta$ of the handle 10, the detection value of the operation torque To by the operation torque sensor 50, and the value of the reaction force torque Tc being generated, it can be considered that the neutral position deviation is eliminated when $|\delta|$, $|To|$, $|Tc|$, which are respectively absolute values of the detection value of the operation angle $\delta$, the detection value of the operation torque To, and the value of the reaction force torque Tc, become smaller than respective threshold values $\delta t$, Tot, Tct, which are set to be close to 0, if the reaction force control described above is executed. That is, when the handle 10 is located at the neutral operation position, which is a position where the handle 10 should be located when the vehicle travels straight, when the operation force applied to the handle 10 by the driver disappears or when the operation reaction force applied to the handle 10 disappears, it can be considered that the neutral position deviation is eliminated. In this respect, the latter has an advantage that the deviation of the neutral steering angle $\omega0$ can be estimated without detecting the actual steering angle $\omega$.

In short, the steering ECU 42 ends changing of the shift steering offset angle $\Delta\omega t$ when the determination parameter P satisfies the end condition. Actually, the shift steering offset angle $\Delta\omega t$ is further changed one time in the shift direction when the end condition is satisfied. If |P| does not become larger than an absolute value (|Pp|) of a previous value Pp by the one-time change, the change of the shift steering offset angle $\Delta\omega t$ is ended as it is. If |P| becomes larger than IPpI, the change of the shift steering offset angle $\Delta\omega t$ is ended by returning the shift steering offset angle $\Delta\omega t$ to the shift steering offset angle $\Delta\omega t$ in a case where the one-time change is not performed. Such a change in the shift steering offset angle $\Delta\omega t$ allows a change in the shift steering offset angle $\Delta\omega t$ to the opposite side across the actual neutral steering angle $\omega0r$ and enables the neutral steering angle $\omega0$ to be set to a value closer to the actual neutral steering angle $\omega0r$.

In consideration of a fact that the neutral position deviation elimination process in the present steering system is executed as a part of the work of the adjuster, the neutral position deviation elimination process is executed in association with an operation of an ignition switch (hereinafter, referred to as "IG" where appropriate) of the vehicle. Specifically, in consideration of a fact that the adjuster checks by the operation terminal 80 whether the end condition is satisfied before the IG is turned to OFF, the steering ECU 42 recognizes that the neutral position deviation elimination process has ended when the IG is turned to OFF. More specifically, the steering ECU 42 recognizes, as a change angle ($|\Delta\omega t - \Delta\omega m|$), a difference between the shift steering offset angle $\Delta\omega t$ and the stored steering offset angle $\Delta\omega m$ stored at the present time. When the change angle ($|\Delta\omega t - \Delta\omega m|$) is larger than a threshold angle $\Delta\omega s$, that is, when the stored neutral steering angle $\omega0m$ is changed relatively largely, the shift steering offset angle $\Delta\omega t$ at that time is stored as the stored steering offset angle $\Delta\omega m$. That is, the stored neutral steering angle $\omega0m$ is updated, and the steering control in which the updated stored neutral steering angle $\omega0m$ is set as the neutral steering angle $\omega0$ is executed thereafter. On the other hand, when the change angle ($|\Delta\omega t - \Delta\omega m|$) is equal to or smaller than the threshold angle $\Delta\omega s$, that is, when there is almost no difference between the shift steering offset angle $\Delta\omega t$ at that time and the stored steering offset angle $\Delta\omega m$, the stored neutral steering angle $\omega0m$ is not updated.

In consideration of a fact that the adjuster confirms the elimination of the neutral position deviation in a case where the driver is the adjuster, when the IG is turned to ON by the driver, the steering ECU 42 maintains the recognition of the end of the neutral position deviation elimination process for a set time ts (hereinafter, referred to as an "end recognition maintaining time ts" where appropriate). The end recognition maintaining time ts may be set to, for example, about 30 seconds to 1 minute, which is a time required for the adjuster to confirm the elimination. The processing related to the operation of the IG will be described later in detail. As described above, when the change angle ($|\Delta\omega t - \Delta\omega m|$) is equal to or smaller than the threshold angle $\Delta\omega s$, that is, when the stored neutral steering angle $\omega0$ is not updated, it is not recognized that the neutral position deviation elimination process has ended.

The relationship between the driving support control described above and the neutral position deviation elimination process is as follows. As described above, each driving support control is executed based on the neutral steering angle $\omega0$ that is independently learned and stored. In the target travel line following control (LTA), which is the high-accuracy required support control, when the neutral position deviation elimination process is started, the neutral steering angle $\omega0$ stored independently in the control is reset, and the execution of the control itself is prohibited. Then, after the recognition that the neutral position deviation elimination process has ended is maintained for the end recognition maintaining time ts, learning of the neutral steering angle $\omega0$ is started. After the neutral steering angle $\omega0$ with high accuracy is acquired by learning, the execution of the control is resumed.

On the other hand, in the travel lane departure prevention control (LDA), the vehicle stabilization control (VSC), and the collision avoidance control (PCS), each of which is the safety-oriented support control, even when the neutral position deviation elimination process is started, the stored neutral steering angle $\omega0$ is not reset, and the control itself is allowed. However, as described above, when the change angle ($|\Delta\omega t - \Delta\omega m|$) is larger than the threshold angle $\Delta\omega s$, that is, when the stored neutral steering angle $\omega 0m$ is changed relatively largely, the neutral steering angle $\omega 0$ stored independently in the control is reset to prohibit the execution of the control when the IG is turned to ON, even in the safety-oriented support control. The execution of the control is resumed after an accurate neutral steering angle $\omega 0$ is acquired by learning. In the safety-oriented support control, the execution of the control may not be prohibited regardless of the change angle ($|\Delta\omega t - \Delta\omega m|$). Further, the learning of the neutral steering angle $\omega 0$ may be started at a time when the neutral position deviation elimination process is ended.

(c) Flow of Neutral Position Deviation Elimination Process

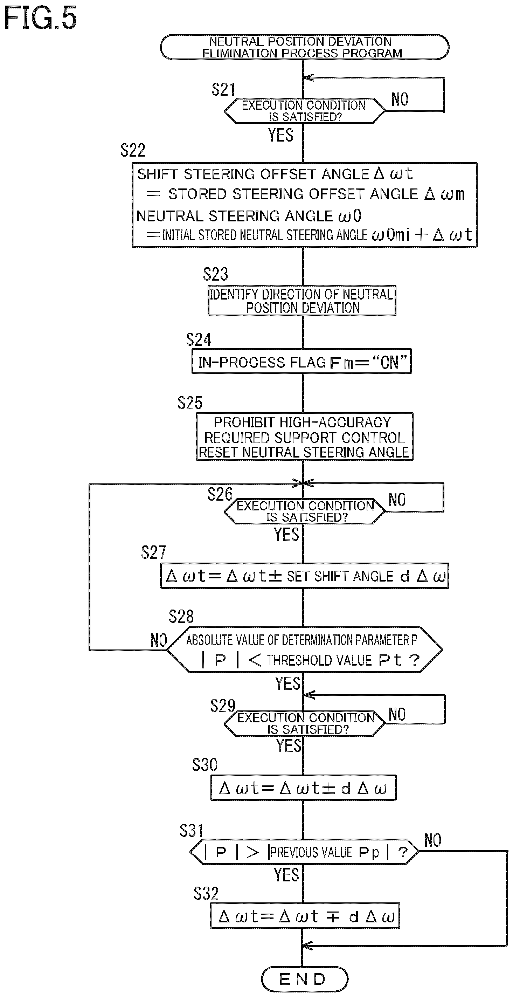

The steering ECU 42 executes a neutral position deviation elimination process program shown in the flowchart of FIG. 5, so that the neutral position deviation elimination process described above is executed. The program is started when the driver operates the operation terminal 80 or the position deviation elimination process start switch 82 in a state in which the vehicle is traveling straight. Hereinafter, the flow of the neutral position deviation elimination process will be briefly described with reference to the flowchart.

In the processing according to the program, it is determined in S21 whether the execution condition is satisfied. As described above, the execution condition is that the vehicle is traveling in a certain speed range and the vehicle is traveling straight. When the execution condition is satisfied, the control flow proceeds to S22 to execute the initial process in which the shift steering offset angle $\Delta\omega t$ is set to the stored steering offset angle $\Delta\omega m$, and the neutral steering angle $\omega 0$ in the steering control is set to a value obtained by adding the initial stored neutral steering angle $\omega 0mi$ and the shift steering offset angle $\Delta\omega t$.

Next, in S23, the direction of the neutral position deviation is identified as described above by identifying in which one of the left direction and the right direction the stored neutral steering angle $\omega 0m$ deviates from the actual neutral steering angle $\omega 0r$. In S24, an in-process flag Fm is set to "ON". Simply speaking, the in-process flag Fm is a flag indicating that the neutral position deviation elimination process is being executed. The in-process flag Fm is set to "ON" when the neutral position deviation elimination process is being executed and is set to "OFF" when the neutral position deviation elimination process is not being executed. Subsequently, in S25, there is sent, to the driving support ECU 66, a command for prohibiting the execution of the high-accuracy required support control (e.g., the target travel line following control) and resetting the value of the neutral steering angle $\omega 0$ acquired by learning in the control.

It is next determined in S26 whether the execution condition is satisfied. When the execution condition is satisfied, the control flow proceeds to S27 in which the shift steering offset angle $\Delta\omega t$ is changed by the set shift angle $d\Delta\omega$ in a direction opposite to the direction of the neutral position deviation. This change is repeated until it is determined in S28 that the end condition is satisfied. The determination of the end condition in S28 is performed based on whether or not the absolute value of the determination parameter P is smaller than the threshold value Pt. As described above, the determination parameter P is any of the deviation angle $d\omega 0$ of the neutral steering angle $\omega 0$, the operation angle $\delta$ of the handle 10, the operation torque To of the handle 10, and the reaction force torque Tc, etc.

When the end condition is satisfied, it is further determined in S29 whether the execution condition is satisfied. When it is determined that the execution condition is satisfied, the shift steering offset angle $\Delta\omega t$ is changed again in S30 by the set shift angle $d\Delta\omega$. The result of this change is confirmed in S31. Specifically, the absolute value of the determination parameter P is compared with the previous determination parameter P (previous value Pp). When the absolute value of the determination parameter P becomes larger than the absolute value of the previous value Pp, the shift steering offset angle $\Delta\omega t$ is reversely changed by the set shift angle $d\Delta\omega$ in S32. That is, the shift steering offset angle $\Delta\omega t$ is returned to a value for which the last change was not performed. On the other hand, when the absolute value of the determination parameter P is not larger than the absolute value of the previous value Pp, the shift steering offset angle $\Delta\omega t$ is not returned.

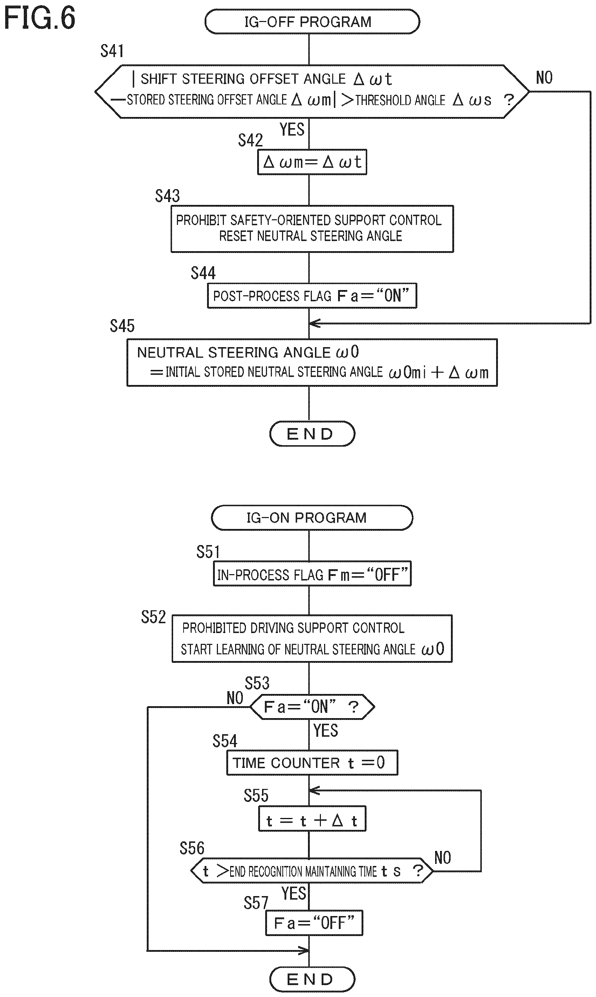

Though the processing according to the neutral position deviation elimination process program is described above, the neutral position deviation elimination process relates to the operation of the IG as described above. In the present steering system, therefore, the steering ECU 42 executes an IG-OFF program when the IG is turned to OFF and executes an IG-ON program when the IG is turned to ON. The IG-OFF program and the IG-ON program are shown in the respective flowcharts of FIG. 6. The flow of processing according to these programs will be briefly described below.

In the processing according to the IG-OFF program, it is confirmed in S41 to what degree the shift steering offset angle $\Delta\omega t$ is finally changed from the stored steering offset angle $\Delta\omega m$, that is, the change angle ($|\Delta\omega t - \Delta\omega m|$) is confirmed. When the change angle ($|\Delta\omega t - \Delta\omega m|$) is larger than the threshold angle $\Delta\omega s$, the stored steering offset angle $\Delta\omega m$ is set to the shift steering offset angle $\Delta\omega t$ in S42. Subsequently, in S43, there is sent, to the driving support ECU 66, a command for prohibiting also the safety-oriented support control (such as the travel lane departure prevention control, the vehicle stabilization control, and the collision avoidance control) and resetting the neutral steering angle $\omega 0$ already acquired by learning in the control. Then, in S44, a post-process flag Fa is set to "ON." The post-process flag Fa is a flag for recognizing that the neutral position deviation elimination process, specifically, the gradual change of the stored neutral position to the actual neutral position, has substantially ended. When it is recognized that the process has ended, the post-process flag Fa is set to "ON".

In S45, the neutral steering angle ω0 is set to a value obtained by adding the stored steering offset angle Δωm to the initial stored neutral steering angle ω0mi. Thereafter, the steering control is executed based on the neutral steering angle ω0 set in this manner. When it is determined in S41 that the change angle (|Δωt - Δωm|) is equal to or smaller than the threshold angle Δωs, the stored steering offset angle Δωm is not changed, and the steering control is executed with the previous neutral steering angle ω0. In this case, the post-process flag Fa is not set to "ON."

In the processing according to the IG-ON program, the in-process flag Fm is reset to "OFF" in S51. Subsequently, in S52, a command to start learning of the neutral steering angle ω0 in the prohibited driving support control is issued to the driving support ECU 66. In a case where the safety-oriented support control is also prohibited and the neutral steering angle ω0 in the control is also reset, learning of the neutral steering angle ω0 is also started based on the command. The driving support control is resumed on condition that an appropriate neutral steering angle ω0 is acquired by learning. Then, in S53, it is determined whether or not the post-process flag Fa is "ON". When the post-process flag Fa is" ON," a time counter t is reset to 0 in S54. In S55, the time counter t is counted up by Δt. This count-up is performed until the time counter t exceeds the end recognition maintaining time ts in S56. After the end recognition maintaining time ts has elapsed, the post-process flag Fa is reset to "OFF" in S57.

(d) Specific Example of Neutral Position Deviation Elimination Process

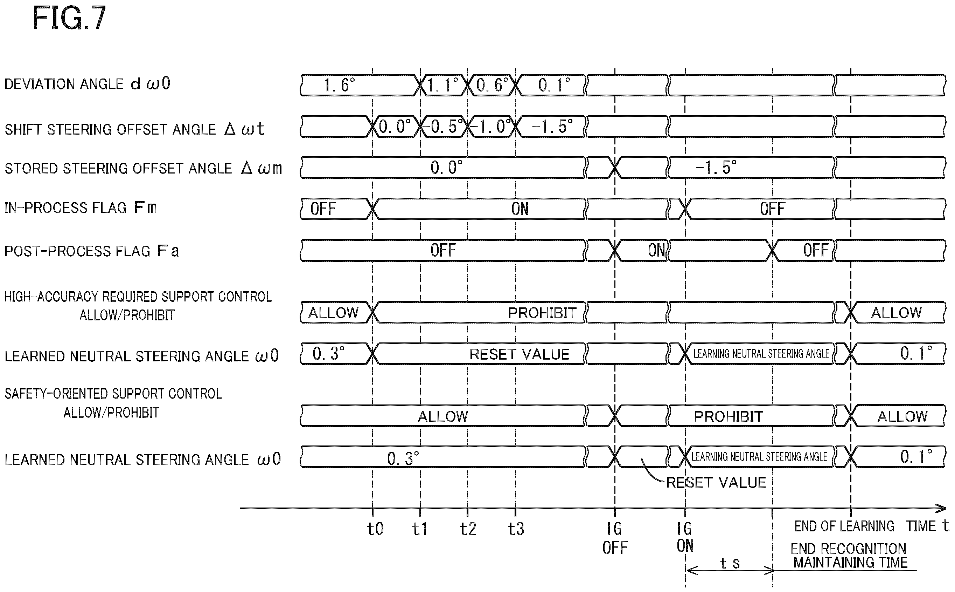

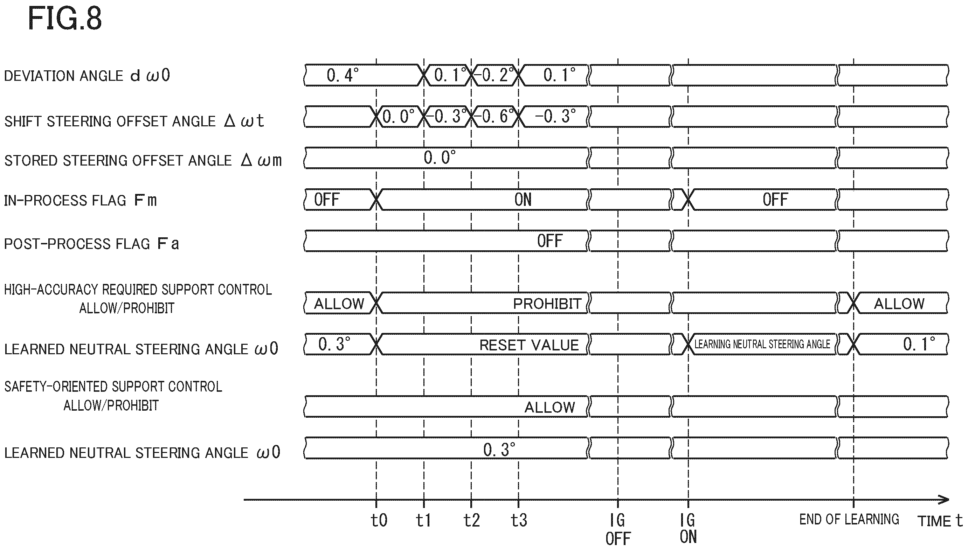

Referring to diagrams of FIGs. 7 and 8, there will be hereinafter described specific examples of the neutral position deviation elimination process.

The diagram of FIG. 7 shows a case in which the neutral steering angle ω0 is changed relatively largely in the neutral position deviation elimination process. Before the neutral position deviation elimination process is executed, the deviation angle dω0 of the neutral steering angle ω0 is 1.6°. That is, the neutral steering angle ω0 is shifted by 1.6° in the left turning direction. At a time point t0, the neutral position deviation elimination process is started. The stored steering offset angle Δωm at that time is 0.0°. The shift steering offset angle Δωt is set to 0.0° at a time when the neutral position deviation elimination process is started. At that time, the in-process flag Fm is set to "ON", and the high-accuracy required support control is prohibited. The neutral steering angle ω0 (0.3°) learned in the control is set to a reset value at that time.

At time points t1, t2, and t3, the shift steering offset angle Δωt is repeatedly changed toward the right turning direction by 0.5°, which is the set shift angle dΔω. That is, the shift steering offset angle Δωt is sequentially changed from 0.0° to -0.5°, -1.0°, and -1.5°. As a result, the deviation angle dω0 of the neutral steering angle ω0 is gradually decreased from 1.6° to 1.1°, 0.6°, and 0.1°. Due to the change of the shift steering offset angle Δωt at the time point t3, the determination parameter P described above (e.g., the deviation angle dω0 of the neutral steering angle ω0) becomes smaller than the threshold value Pt (e.g., the deviation angle 0.2°), and the change of the shift steering offset angle Δωt is ended.

After the change of the shift steering offset angle Δωt is ended, the IG is turned to OFF. In the neutral position deviation elimination process, the change angle (|Δωt - Δωm|), which is the difference between the shift steering offset angle Δωt and the stored steering offset angle Δωm, is finally larger than the threshold angle Δωs (e.g., 0.4°). Therefore, at the time when the IG is turned to OFF, the stored steering offset angle Δωm is set to -1.5°, which is the shift steering offset angle Δωt at that time, and the post-process flag Fa is set to "ON." Further, the execution of the safety-oriented support control is also prohibited from that time point, and the neutral steering angle ω0 (0.3°) learned in the control is set as the reset value at that time point.

Next, when the IG is turned to ON, the in-process flag Fm is reset to "OFF," and the learning of the neutral steering angle ω0 in the prohibited driving support control (the high-accuracy required support control and the safety-oriented control) is started. After an appropriate neutral steering angle ω0 (0.1°) is acquired by the learning, the learning is ended, and the execution of the prohibited driving support control is allowed. Further, the post-process flag Fa is reset to "OFF" at a time point when the end recognition maintaining time ts elapses after the IG is turned to ON.

The diagram of FIG. 8 shows a case in which the neutral position deviation elimination process is executed, but the neutral steering angle ω0 is not substantially changed because the change angle (|Δωt - Δωm) is equal to or smaller than the threshold angle Δωs (e.g., 0.4°). Unlike the case of FIG. 7, the set shift angle dΔω is set to 0.3°.

In the case shown in FIG. 8, before the neutral position deviation elimination process is executed, the deviation angle dω0 of the neutral steering angle ω0 is 0.4°. That is, the neutral steering angle ω0 is shifted by 0.4° in the left turning direction. At a time point t0, the neutral position deviation elimination process is started. The stored steering offset angle Δωm at that time is 0.0°. The shift steering offset angle Δωt is set to 0.0° at a time when the neutral position deviation elimination process is started. Then, the in-process flag Fm is set to "ON" at that time, and the high-accuracy required support control is prohibited. The neutral steering angle ω0 (0.3°) learned in the control is set to a reset value at that time.

At a time point t1, the shift steering offset angle Δωt is changed toward the right turning direction by 0.3°, which is the set shift angle dΔω. Due to the change, the determination parameter P (e.g., the deviation angle dω0 of the neutral steering angle ω0) becomes smaller than the threshold value Pt (e.g. the deviation angle 0.2°). In accordance with the program described above, at a time point t2, the shift steering offset angle $\Delta\omega t$ is again changed toward the right turning direction by 0.3°, which is the set shift angle $d\Delta\omega$. As a result, the absolute value of the determination parameter P (- 0.2° which is the deviation angle $d\omega 0$) becomes larger than the previous value Pp (0.1°), and the shift steering offset angle $\Delta\omega t$ is returned to a value (- 0.3) at a time point t3 before the change is performed.

After the shift steering offset angle $\Delta\omega t$ is changed, the IG is turned to OFF. In the neutral position deviation elimination process, however, the change angle ($|\Delta\omega t - \Delta\omega m| = 0.3$) is finally equal to or smaller than the threshold angle $\Delta\omega s$ (e.g., 0.4°). Thus, even if the IG is turned to OFF, the stored steering offset angle $\Delta\omega m$ is not changed, and the post-process flag Fa is not set to "ON." Further, the execution of the safety-oriented support control is not prohibited, and the neutral steering angle $\omega 0$ (0.3°) learned in the control is maintained.

Next, when the IG is turned to ON, the in-process flag Fm is reset to "OFF," and the learning of the neutral steering angle $\omega 0$ in the prohibited driving support control (the high-accuracy required support control) is started. After an appropriate neutral steering angle $\omega 0$ (0.1°) is acquired by the learning, the learning is ended, and the execution of the prohibited driving support control is allowed.

**Claims**

1.  A steer-by-wire steering system mounted on a vehicle, comprising:

    an operation member (10) operable by a driver;
    a steering actuator (16) having a drive source (38) and configured to steer a wheel (14) by a force of the drive source;
    a controller (42) configured to control the steering actuator so as to cause the wheel to be steered in accordance with an operation of the operation member,
    wherein, when a stored neutral position, which is a neutral steering position stored for controlling the steering actuator, deviates from an actual neutral position, which is an actual neutral steering position, the controller executes, in a state in which the operation of the operation member to cause the vehicle to travel straight by the driver of the vehicle is maintained, a neutral position deviation elimination process in which the stored neutral position is brought closer to the actual neutral position.

2.  The steer-by-wire steering system according to claim 1, wherein the neutral position deviation elimination process is a process of gradually changing the stored neutral position toward the actual neutral position.

3.  The steer-by-wire steering system according to claim 1, wherein the controller (42) ends the neutral position deviation elimination process on condition that an operation position of the operation member (10) is located at a neutral operation position that is a position at which the operation member is to be located when the vehicle travels straight.

4.  The steer-by-wire steering system according to claim 1, further comprising an operation reaction force applying device (12) configured to apply, to the operation member (10), an operation reaction force that is a reaction force against the operation of the operation member,
    wherein the controller (42) is configured to:

    execute a control for applying the operation reaction force that includes a component for returning the operation position of the operation member to a neutral operation position that is a position at which the operation member is to be located when the vehicle travels straight; and
    end the neutral position deviation elimination process on condition that the operation reaction force disappears or an operation force of the driver against the operation reaction force disappears.

5.  The steer-by-wire steering system according to claim 1,

    wherein a plurality of driving support controls, each of which involves automatic steering of the wheel (14), is executed in the vehicle; and
    wherein the steer-by-wire steering system is configured to allow at least one of the plurality of driving support controls even during execution of the neutral position deviation elimination process.

6.  The steer-by-wire steering system according to claim 5,

    wherein the plurality of driving support controls includes a safety-oriented support control for prioritizing safety of traveling of the vehicle over an accuracy of the neutral steering position, and
wherein the steer-by-wire steering system is configured to allow at least the safety-oriented support control even during execution of the neutral position deviation elimination process.

FIG.1

# FIG.2

```
┌─────────────────────────┐
│   STEERING CONTROL      │
│       PROGRAM           │
└─────────────────────────┘
```

S1
OBTAIN OPERATION
ANGLE $\delta$

S2
DETERMINE TARGET
STEERING ANGLE $\omega^*$
$\omega^* = Ns \cdot \delta$

S3
DETERMINE TARGET STEERING
MOTOR ROTATIONAL ANGLE $\phi s^*$
$\phi s^* = Nms \cdot \omega^*$

S4
DETECT ACTUAL STEERING
MOTOR ROTATIONAL ANGLE $\phi s$

S5
IDENTIFY STEERING MOTOR
ROTATIONAL ANGLE DEVIATION $\Delta \phi s$
$\Delta \phi s = \phi s^* - \phi s$

S6
DETERMINE STEERING TORQUE Ts
$Ts = Gsp \cdot \Delta \phi s + Gsi \cdot \int (\Delta \phi s) dt + Gsd \cdot d(\Delta \phi s) / dt$

S7
DETERMINE STEERING
CURRENT Is
$Is = Ks \cdot Ts$

S8
SUPPLY STEERING
CURRENT Is

S9
TRANSMIT STEERING
CURRENT SIGNAL

```
┌─────────────┐
│     END     │
└─────────────┘
```

# FIG.3

```
        ┌─────────────────────────────┐
        │     REACTION FORCE          │
        │   CONTROL PROGRAM           │
        └─────────────────────────────┘
                      │
S11 ┌─────────────────────────────────┐
    │   DETECT REACTION FORCE         │
    │ MOTOR ROTATIONAL ANGLE $\phi c$ │
    └─────────────────────────────────┘
                      │
  S12 ┌───────────────────────────┐
      │    IDENTIFY OPERATION      │
      │        ANGLE $\delta$      │
      │  $\delta = Nmc \cdot \phi c$ │
      └───────────────────────────┘
                      │
  S13 ┌───────────────────────────┐
      │   TRANSMIT OPERATION       │
      │      ANGLE SIGNAL          │
      └───────────────────────────┘
                      │
 S14 ┌────────────────────────────────┐
     │  DETERMINE NEUTRAL POSITION     │
     │    RETURN COMPONENT Tcc         │
     │  $Tcc = Cc \cdot \delta$        │
     └────────────────────────────────┘
                      │
  S15 ┌───────────────────────────┐
      │   OBTAIN STEERING          │
      │     CURRENT Is             │
      └───────────────────────────┘
                      │
 S16 ┌────────────────────────────────┐
     │  DETERMINE STEERING-LOAD        │
     │  -DEPENDENT COMPONENT Tcs       │
     │  $Tcs = Cs \cdot Is$            │
     └────────────────────────────────┘
                      │
  S17 ┌───────────────────────────┐
      │   DETERMINE REACTION       │
      │     FORCE TORQUE Tc        │
      │  $Tc = Tcc + Tcs$          │
      └───────────────────────────┘
                      │
  S18 ┌───────────────────────────┐
      │  DETERMINE REACTION        │
      │   FORCE CURRENT Ic         │
      │  $Ic = Kc \cdot Tc$        │
      └───────────────────────────┘
                      │
  S19 ┌───────────────────────────┐
      │   SUPPLY REACTION          │
      │    FORCE CURRENT           │
      └───────────────────────────┘
                      │
              ┌───────────────┐
              │     END       │
              └───────────────┘
```

FIG.4A

FIG.4B

# FIG.5

NEUTRAL POSITION DEVIATION
ELIMINATION PROCESS PROGRAM

S21 EXECUTION CONDITION
IS SATISFIED? —— NO

YES

S22

SHIFT STEERING OFFSET ANGLE $\Delta\omega t$
= STORED STEERING OFFSET ANGLE $\Delta\omega m$
NEUTRAL STEERING ANGLE $\omega 0$
= INITIAL STORED NEUTRAL STEERING ANGLE $\omega 0mi + \Delta\omega t$

S23

IDENTIFY DIRECTION OF NEUTRAL
POSITION DEVIATION

S24

IN-PROCESS FLAG $Fm=$"ON"

S25

PROHIBIT HIGH-ACCURACY
REQUIRED SUPPORT CONTROL
RESET NEUTRAL STEERING ANGLE

S26 EXECUTION CONDITION
IS SATISFIED? —— NO

YES

S27

$\Delta\omega t = \Delta\omega t \pm$ SET SHIFT ANGLE $d\Delta\omega$

S28

NO —— ABSOLUTE VALUE OF DETERMINATION PARAMETER P
$|P| <$ THRESHOLD VALUE $Pt$ ?

YES

S29 EXECUTION CONDITION
IS SATISFIED? —— NO

YES

S30

$\Delta\omega t = \Delta\omega t \pm d\Delta\omega$

S31 $|P| >$ |PREVIOUS VALUE $Pp$| ? —— NO

YES

S32

$\Delta\omega t = \Delta\omega t \mp d\Delta\omega$

END

# FIG.6

IG-OFF PROGRAM

S41
| SHIFT STEERING OFFSET ANGLE $\Delta \omega t$
—STORED STEERING OFFSET ANGLE $\Delta \omega m$ | >THRESHOLD ANGLE $\Delta \omega s$ ?    NO

YES

S42
$\Delta \omega m = \Delta \omega t$

S43
PROHIBIT SAFETY-ORIENTED SUPPORT CONTROL
RESET NEUTRAL STEERING ANGLE

S44
POST-PROCESS FLAG $F a =$ "ON"

S45
NEUTRAL STEERING ANGLE $\omega 0$
= INITIAL STORED NEUTRAL STEERING ANGLE $\omega 0mi + \Delta \omega m$

E N D

IG-ON PROGRAM

S51
IN-PROCESS FLAG $F m =$ "OFF"

S52
PROHIBITED DRIVING SUPPORT CONTROL
START LEARNING OF NEUTRAL STEERING ANGLE $\omega 0$

S53
NO    $F a =$ "ON" ?

YES

S54
TIME COUNTER $t = 0$

S55
$t = t + \Delta t$

S56
$t >$ END RECOGNITION MAINTAINING TIME $t s$ ?    NO

YES

S57
$F a =$ "OFF"

E N D

# FIG.7

| | | | | | | |
|---|---|---|---|---|---|---|
| DEVIATION ANGLE $d\omega0$ | 1.6° | 1.1° | 0.6° | 0.1° | | |
| SHIFT STEERING OFFSET ANGLE $\Delta\omega t$ | | 0.0° | -0.5° | -1.0° | -1.5° | |
| STORED STEERING OFFSET ANGLE $\Delta\omega m$ | 0.0° | | | | -1.5° | |
| IN-PROCESS FLAG $Fm$ | OFF | ON | | | OFF | |
| POST-PROCESS FLAG $Fa$ | OFF | | | ON | OFF | |
| HIGH-ACCURACY REQUIRED SUPPORT CONTROL ALLOW/PROHIBIT | ALLOW | PROHIBIT | | | | ALLOW |
| LEARNED NEUTRAL STEERING ANGLE $\omega0$ | 0.3° | RESET VALUE | | | LEARNING NEUTRAL STEERING ANGLE | 0.1° |
| SAFETY-ORIENTED SUPPORT CONTROL ALLOW/PROHIBIT | ALLOW | | | PROHIBIT | | ALLOW |
| LEARNED NEUTRAL STEERING ANGLE $\omega0$ | 0.3° | | | LEARNING NEUTRAL STEERING ANGLE | 0.1° | |

RESET VALUE

t0  t1  t2  t3   IG OFF   IG ON   END OF LEARNING   TIME $t$

$t s$

END RECOGNITION MAINTAINING TIME

EP 4 585 494 A1

# FIG.8

| | | t0 | t1 | t2 | t3 | IG OFF | IG ON | END OF LEARNING |
|---|---|---|---|---|---|---|---|---|

DEVIATION ANGLE d ω0: 0.4° / 0.1° / -0.2° / 0.1°

SHIFT STEERING OFFSET ANGLE Δ ωt: 0.0° / -0.3° / -0.6° / -0.3°

STORED STEERING OFFSET ANGLE Δ ωm: 0.0°

IN-PROCESS FLAG F m: OFF / ON / OFF

POST-PROCESS FLAG F a: OFF

HIGH-ACCURACY REQUIRED SUPPORT CONTROL ALLOW/PROHIBIT: ALLOW / PROHIBIT / ALLOW

LEARNED NEUTRAL STEERING ANGLE ω0: 0.3° / RESET VALUE / LEARNING NEUTRAL STEERING ANGLE / 0.1°

SAFETY-ORIENTED SUPPORT CONTROL ALLOW/PROHIBIT: ALLOW

LEARNED NEUTRAL STEERING ANGLE ω0: 0.3°

TIME t

EP 4 585 494 A1

Europäisches
Patentamt

European
Patent Office

Office européen
des brevets

# EUROPEAN SEARCH REPORT

**Application Number**

EP 24 21 2143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/234639 A1 (KOUDAI TAKASHI [JP] ET AL) 27 July 2023 (2023-07-27) | 1-3 | INV. B62D15/02 B62D5/04 |
| A | * paragraphs [0028], [0062], [0076] - [0078]; figures 1,4 * | 4-6 | |
| | ----- | | |

**TECHNICAL FIELDS SEARCHED (IPC)**

B62D

The present search report has been drawn up for all claims

| Place of search | Date of completion of the search | Examiner |
|---|---|---|
| The Hague | 16 April 2025 | Areal Calama, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                          
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 21 2143

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | Publication date | Patent family member(s) | Publication date |
|---|---|---|---|
| US 2023234639 A1 | 27-07-2023 | CN 116495053 A | 28-07-2023 |
| | | EP 4219270 A1 | 02-08-2023 |
| | | JP 2023108922 A | 07-08-2023 |
| | | US 2023234639 A1 | 27-07-2023 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018177128 A